# EUROPEAN PATENT SPECIFICATION

(11) **EP 3 632 577 B1**
(45) Date of publication and mention of the grant of the patent: **28.07.2021**
(21) Application number: 18805033.0
(22) Date of filing: 22.05.2018
(51) Int. Cl.: B05D 1/02, B05D 3/00, B05D 3/02, B05D 5/08, F27B 9/26, F16C 33/10, F16C 33/14, F16C 33/20, F16C 33/44, F16C 33/66, F16C 33/46, F16C 29/06

(54) **PLASTIC SPRAYING PROCESS AND APPARATUS FOR BEARING RETAINER**
KUNSTSTOFFSPRÜHVERFAHREN UND -VORRICHTUNG FÜR LAGERHALTER
PROCÉDÉ ET APPAREIL DE PULVÉRISATION DE PLASTIQUE POUR DISPOSITIF DE RETENUE DE ROULEMENT

(30) Priority: 25.05.2017 CN 201710381189
(43) Date of publication of application: 08.04.2020
(73) Proprietor: Shandong Golden Empire Precision Machinery Technology Co., Ltd, Shandong 252035 (CN)
(72) Inventor: ZHENG, Guanghui, Liaocheng Shandong 252035 (CN); ZHAO, Peizhen, Liaocheng Shandong 252035 (CN)
(74) Representative: Huang, Liwei
(86) International application number: PCT/CN2018/087853
(87) International publication number: WO 2018/214876

(56) References cited:
- EP-A1- 2 157 135
- CN-A- 101 715 471
- CN-A- 104 302 936
- CN-A- 107 335 591
- CN-U- 203 670 477
- CN-U- 203 670 477
- CN-U- 204 902 565
- CN-U- 206 803 730
- CN-U- 207 170 170
- DE-A1- 3 041 355
- DE-A1-102015 216 872
- JP-A- 2003 301 838
- JP-A- 2005 299 852
- JP-A- 2007 170 537
- JP-A- 2009 115 255
- JP-A- 2009 133 403
- JP-A- 2009 150 256
- KR-B1- 100 765 044
- US-A- 4 744 679
- US-A1- 2010 062 169

## Description

### TECHNICAL FIELD

The invention relates to processing technology for bearing retainer, especially relates to an plastic spraying process for bearing retainer.

### BACKGROUND TECHNOLOGY

The bearing retainer is one of the important components in the bearing. The bearing retainer is used to guide the normal operation of the rolling elements during the running of the bearing. The conventional processing technology of the bearing retainer in the prior art is sheet metal or strip metal--shearing--punching--press forming--shaping and finishing. The finishing refers to a process of trimming the bearing retainer to remove the burrs on the surface of the bearing retainer. The prior art does not perform any treatment on the bearing retainer after the bearing retainer is shaped and finished. The bearing retainer is subjected to the impact and abrasion of the rolling elements during the operation of the bearing, and noise is generated. And the bearing retainer is damaged by corrosion and rusting due to its special working environment.

The plastic spraying process has an enormous application range in the prior art, such as automobile industry, mechanical manufacturing field and so on. The corrosion resistance and abrasion resistance of the workpiece will be improved significantly after the plastic spraying process.

However, the plastic spraying process is not used in the processing of the bearing retainer in the prior art. The existing bearing retainer usually only relies on its own material and structure to change its performance. And the corrosion resistance, the abrasion resistance and other properties are far from being used, which affects the service life of the bearing seriously.

Some spraying, coating and/or heating apparatuses in prior arts can be found in DE 102015216872A1, EP 2157135A1, CN 203670477U, JP 2005299852A, JP 2009150256A, JP 2009133403A, JP 2009115255A, JP 2007170537A, JP 2003301838A, and US 20100062169A1.

### Summary of the invention

The present invention utilizes the characteristics that the workpiece will have excellent properties after being processed by the plastic spraying process. The present invention applies a plastic spraying process to the bearing retainer in combination with the actual working conditions of the bearing retainer to solve the problems of poor abrasion resistance, high noise, poor corrosion resistance, poor impact resistance,etc of the existing bearing retainer.

The present invention provides a plastic spraying process for bearing retainer as defined in claim 1, as well as same advantageous embodiments as defined its dependent claims.

Further, the present invention also provides an apparatus for processing plastic spraying on bearing retainer as defined in claim 6.

To be specific, a plastic spraying process for bearing retainer, using a plastic spraying process to treat a bearing retainer which has been processed by a conventional processing technology. The invention has the advantages of improving the wear resistance of the bearing retainer, reducing the noise caused by the impact between the rolling elements and the bearing retainer, improving the corrosion resistance of the bearing retainer, and providing cushioning effect for collision between the rolling elements and the bearing retainer.

The present invention makes specific improvements to the above technical solutions, and the specific improvements are the plastic spraying process for bearing retainer comprises the following process steps:
step 1: pretreatment to the bearing retainer: carrying out rust removal and decontamination treatment on the bearing retainer;
step 2: plastic spraying treatment on the bearing retainer: putting the bearing retainer treated in the step 1 into a plastic spraying device to carry out plastic spraying treatment on the bearing retainer, a thickness of the coating obtained by the spraying treatment is no less than 10 microns;
step 3: heat-curing treatment on the bearing retainer: putting the bearing retainer treated in the step 2 into a heating furnace for heating and curing, the bearing retainer is moved vertically in the heating furnace, a heating temperature is not lower than 80 °C, and a heating time is no less than 5 minutes;
step 4: cooling treatment on the bearing retainer: cooling the bearing retainer down after taking the bearing retainer treated in the step 3 out of the heating furnace, and a cooling temperature is not higher than 80 °C.

The invention has the following advantages: pretreatment of the bearing retainer to remove the dirt on the surface of the bearing retainer; and then spray the bearing retainer with a plastic spraying device; after the plastic spraying process is completed, put it into a heating furnace for heating and curing; and finally, the bearing retainer is cooled and packaged, and the plastic spraying process for bearing retainer is completed.

The present invention makes specific improvement to the above technical solutions, and the specific improvement is a shot blasting machine is used to perform the rust removal treatment on the bearing retainer in the step 1. The invention has the following advantages: it can remove the dirt on the surface of the bearing retainer after the bearing retainer is rust-removed, thereby facilitating the subsequent plastic spraying treatment on the bearing retainer.

The present invention makes specific improvement to the above technical solutions, and the specific improvement is the thickness of the coating obtained by the plastic spraying treatment in the step 2 is from 30 microns to 300 microns.

The present invention makes specific improvements to the above technical solutions, and the specific improvements are the heating furnace used in the step 3 includes a furnace body, a device of vertical circulation is fixedly disposed in the furnace body, and a fixing member is provided on the device of vertical circulation, a tray is horizontally placed in the furnace body, and the tray is provided with a detachable member, the detachable member provided on the tray is so adapted as to be able to be mounted on the fixing member provided on the device of vertical circulation, a feed port is provided on a left side of the furnace body, and a discharge port is provided on a right side of the furnace body, and the feed port and the discharge port are not arranged on a same horizontal line. The invention has the following advantages: the bearing retainer can move vertically in the heating furnace and be uniformly heated after the bearing retainer is put into the heating furnace. The feed port and the discharge port are arranged on a different horizontal line, which can prevent air convection effectively, avoid heat losses in the heating furnace, and keep the temperature in the furnace stable. The design of the heating furnace makes it to take up small space, require a low cost investment and have a low energy consumption.

The present invention makes specific improvements to the above technical solutions, and the specific improvements are the temperature of the heat-curing treatment in the step 3 is from 100 °C to 300 °C, and the time of the heat-curing treatment is from 10 minutes to 20 minutes. The invention has the following advantages: the sprayed material can be stabilized on the bearing retainer through heat-curing treatment after the plastic spraying treatment on the bearing retainer is completed.

The present invention makes specific improvement to the above technical solutions, and the specific improvement is the bearing retainer is cooled to 80 °C in the step 4.

The present invention also provides an apparatus for processing plastic spraying on a bearing retainer, the apparatus comprises a heating furnace and an plastic spraying device, the heating furnace includes a furnace body, a device of vertical circulation is fixedly disposed in the furnace body, and a fixing member is provided on the device of vertical circulation, a tray is horizontally placed in the furnace body, and the tray is provided with a detachable member, the detachable member provided on the tray is so adapted as to be able to be mounted on the fixing member provided on the device of vertical circulation. The invention has the following advantages: the bearing retainer can move vertically in the heating furnace and be uniformly heated after the bearing retainer is put into the heating furnace. The design of the heating furnace makes it to take up small space, require a low cost investment and have a low energy consumption.

The present invention makes specific improvements to the above technical solutions, and the specific improvements are a feed port is provided on a left side of the furnace body, and a discharge port is provided on a right side of the furnace body, and the feed port and the discharge port are not aligned on a same horizontal line. The feed port and the discharge port are arranged on a different horizontal line, which can prevent air convection effectively, avoid heat losses in the heating furnace, and keep the temperature in the furnace stable.

### BRIEF DESCRIPTION OF THE DRAWINGS

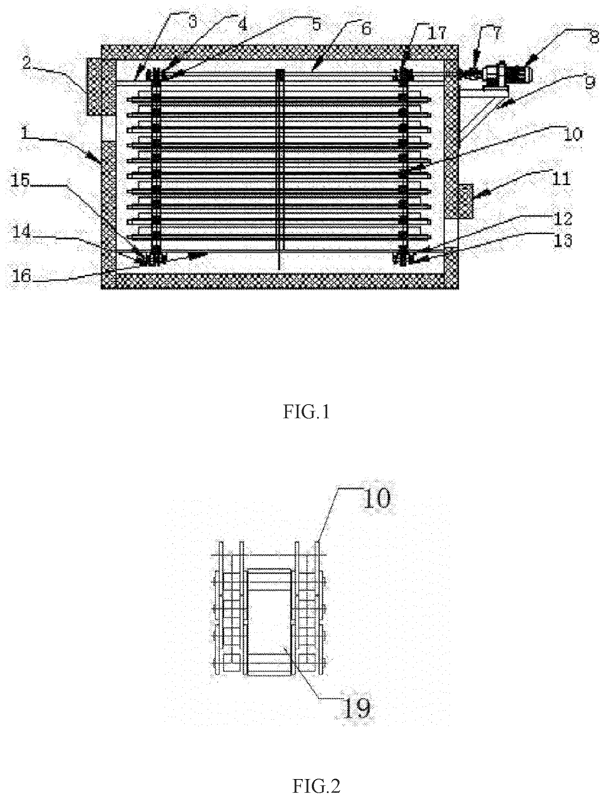

FIG. 1 shows a schematic structural diagram of a heating furnace of the present invention.
FIG. 2 shows a schematic structural diagram of a chain in a heating furnace of the present invention.

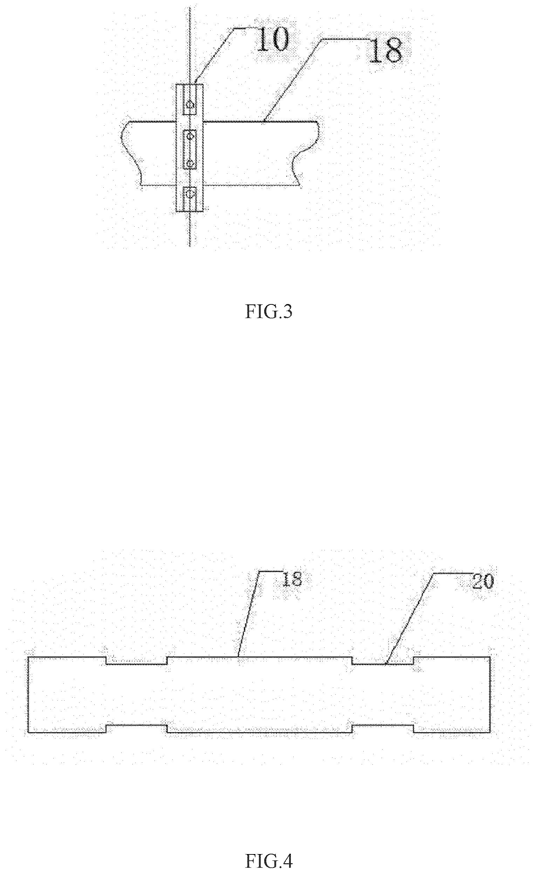

FIG. 3 shows a schematic structural diagram of a chain and a tray cooperated with installation in a heating furnace of the present invention.
FIG. 4 shows a schematic structural diagram of a tray in a heating furnace of the present invention.

1 refers to a furnace body, 2 refers to a feed automatic door, 3 refers to a fixation rod I, 4 refers to a bearing, 5 refers to a fixed base for bearing, 6 refers to a rotating shaft, 7 refers to a coupling, 8 refers to a motor, 9 refers to a motor support frame, 10 refers to a device of vertical circulation, 11 refers to a discharge automatic door, 12 refers to a fixed base for bearing, 13 refers to a bearing, 14 refers to a sprocket II, 15 refers to a rotating shaft, 16 refers to a fixation rod II, 17 refers to a sprocket I, 18 refers to a tray, 19 refers to a fixing member, 20 refers to a detachable member.

### DETAILED DESCRIPTION

The present invention is further described in detail in the following specific embodiments.

Use a plastic spraying process to treat a bearing retainer which has been processed by a conventional processing technology. The plastic spraying process for bearing retainer comprises the following process steps: firstly, preprocess the bearing retainer to remove the dirt on the surface of the bearing retainer; secondly, put the bearing retainer treated by the pretreatment into a plastic spraying device to carry out plastic spraying treatment on the bearing retainer, a thickness of the coating obtained by the spraying treatment is no less than 10 microns; and then put the bearing retainer treated by plastic spraying technology into a heating furnace for heating and curing treatment, a heating temperature is not lower than 100 °C, and a heating time is no less than 5 minutes; finally, cool the bearing retainer down after taking the bearing retainer treated by heat-curing technology out of the heating furnace, and a cooling temperature is not higher than 120 °C.

The heating furnace used in the above heat-curing technology includes a furnace body 1, a device of vertical circulation 10 is fixedly disposed in the furnace body 1, and a fixing member 19 is provided on the device of vertical circulation 10, a tray 18 is horizontally placed in the furnace body 1, and the tray 18 is provided with a detachable member 20, the detachable member 20 provided on the tray 18 is so adapted as to be able to be mounted on the fixing member 19 provided on the device of vertical circulation 10, a feed port is provided on a left side of the furnace body, and a discharge port is provided on a right side of the furnace body, and the feed port and the discharge port are not arranged on a same horizontal line.

Specifically, the heating furance includes a furnace body 1, a fixation rod I 3 is provided on an upper interior part of the furnace body 1, and the fixation rod I 3 is horizontally mounted between the left inner wall and the right inner wall of the furnace body 1. The fixation rod I 3 is provided with a fixed base for bearing 5, and the fixed base for bearing 5 is installed with a bearing 4. A rotating shaft 6 penetrates the bearing 4 and is horizontally installed in the furnace body 1. The rotating shaft 6 is connected to a motor 8 through a coupling 7. Both the left side and the right side of the rotating shaft 6 are fixed with a sprocket I 17. The furnace body is provided with a chain 10 and the chain 10 is vertically arranged in the furnace body. The chain 10 is mounted on the sprocket I 17, and the chain is provided with a buckle hole. A sprocket II 14 matching with a chain is arranged on a lower interior part of the furnace body. The sprocket II 14 is fixed on a rotating shaft 15 and the rotating shaft 15 penetrates a bearing 13 and is horizontally arranged in the furnace body 1. The bearing 13 is mounted on a fixed base for bearing 12. The fixed base for bearing 12 is mounted on a fixation rod II 16. The fixation rod II 16 is horizontally mounted between the left inner wall and the right inner wall of the furnace body 1. A feed port 2 is provided on a left side of the furnace body, and a discharge port 11 is provided on a right side of the furnace body 1, and the feed port 2 and the discharge port 11 are not arranged on a same horizontal line.

A pushing device transports the tray 18 into the heating furnace, and the bearing retainer enters the heating furnace together with the tray 18 in the process of concrete operation usage. The tray 18 is fixed in the buckle hole on the chain through the slot on the left end and right end of the tray. The tray 18 drives the bearing retainer to move with the chain in the heating furnace, so that the bearing retainer can be uniformly heated. The bearing retainer moves unidirectionally from the top of the heating furnace to the bottom of the heating furnace after it is put into the heating furnace from the feed port. The tray is pulled out of the heating furnace by using the pushing device when the bearing retainer moves to the discharge port.

### Detailed description 1

Plastic spraying process for 6302-type deep groove ball bearing retainer, which comprises the following process steps:
step 1: processing on the bearing retainer: sheet metal or strip metal--shearing-- punching-- press forming--shaping and finishing. The finishing refers to a process of trimming the bearing retainer to remove the burrs on the surface of the bearing retainer.
step 2: pretreatment to the bearing retainer: remove the dirt on the surface of the bearing retainer by using a shoot blasting machine when the shaping and finishing treatment on the bearing retainer is over.
step 3: plastic spraying treatment on the bearing retainer: put the bearing retainer into a plastic spraying device to carry out plastic spraying treatment on the bearing retainer, and the surface of the bearing retainer is evenly coated with a coating having a thickness of 50 microns after the plastic spraying treatment.
step 4: heat-curing treatment on the bearing retainer: put the bearing retainer with a uniform coating into a heating furnace for heating and curing, a heating temperature is 180 °C, and a heating time is 10 minutes.
step 5: take the bearing retainer out of the heating furnace when the plastic spraying treatment is completed, and cool the bearing retainer down to 80 °C in the air.

After the plastic spraying treatment, the 6302-type deep groove ball bearing retainer has a coating thickness of 50 microns on the surface and a coating density of 0.98 grams per cubic centimeter. Compared with bearing retainers treated by conventional processing technology, the wear rate of the bearing retainers treated by plastic spraying technology has decreased by about 50%, and its working life has been extended by about 10 years. And the bearing retainer treated by the plastic spraying technology has a good seismic behavior.

### Detailed description 2

Plastic spraying process for 51109-type thrust bearing retainer, which comprises the following process steps:
step 1: processing on the bearing retainer: sheet metal or strip metal--shearing--punching--press forming--shaping and finishing.
step 2: pretreatment to the bearing retainer: remove the dirt on the surface of the bearing retainer by using a shoot blasting machine when the shaping and finishing treatment on the bearing retainer is over.
step 3: plastic spraying treatment on the bearing retainer: put the bearing retainer into a plastic spraying device to carry out plastic spraying treatment on the bearing retainer, and the surface of the bearing retainer is evenly coated with a coating having a thickness of 80 microns after the plastic spraying treatment.
step 4: heat-curing treatment on the bearing retainer: put the bearing retainer with a uniform coating into a heating furnace for heating and curing, a heating temperature is 200 °C, and a heating time is 15 minutes.
step 5: take the bearing retainer out of the heating furnace when the plastic spraying treatment is completed, and cool the bearing retainer down to 80 °C in the air.

After the plastic spraying treatment, the 51109-type thrust bearing retainer has a coating thickness of 80 microns on the surface and a coating density of 0.98 grams per cubic centimeter. Compared with bearing retainers treated by conventional processing technology, the wear rate of the bearing retainers treated by plastic spraying technology has decreased by about 50%, and its working life has been extended by about 10 years. And the bearing retainer treated by the plastic spraying technology has a good seismic behavior.

The above description is only the embodiment of the present application and is not intended to limit the application. The invention is limited by the appended claims.

## Claims

1. Plastic spraying process for bearing retainer, the process comprising the following process steps:
step 1: pretreatment to the bearing retainer: carrying out rust removal and decontamination treatment on the bearing retainer;
step 2: plastic spraying treatment on the bearing retainer: putting the bearing retainer treated in the step 1 into a plastic spraying device to carry out plastic spraying treatment on the bearing retainer, a thickness of the coating obtained by the spraying treatment is no less than 10 microns;
step 3: heat-curing treatment on the bearing retainer: putting the bearing retainer treated in the step 2 into a heating furnace for heating and curing, heating temperature is not lower than 80 °C, and heating time is no less than 5 minutes;
step 4: cooling treatment on the bearing retainer: cooling the bearing retainer down after taking the bearing retainer treated in the step 3 out of the heating furnace, and cooling temperature is not higher than 80 °C;
**characterized in that**
in step 3, the bearing retainer is moved vertically in the heating furnace; and
the heating furnace used in step 3 includes a furnace body (1), a device of vertical circulation (10) is fixedly disposed in the furnace body (1), and a fixing member (9) is provided on the device of vertical circulation (10), a tray (18) is horizontally placed in the furnace body (1), and the tray (18) is provided with a detachable member (20), the detachable member (20) provided on the tray (18) is so adapted as to be able to be mounted on the fixing member (9) provided on the device of vertical circulation (10),
a feed port is provided on a left side of the furnace body (1), and a discharge port is provided on a right side of the furnace body (1), and the feed port and the discharge port are not arranged on a same horizontal line;

2. Plastic spraying process for bearing retainer according to claim 1, wherein a shot blasting machine is used to perform the rust removal treatment on the bearing retainer in the step 1.

3. Plastic spraying process for bearing retainer according to claim 1, wherein the thickness of the coating obtained by the plastic spraying treatment in the step 2 is from 30 microns to 300 microns.

4. Plastic spraying process for bearing retainer according to claim 1, wherein the temperature of the heatcuring treatment in the step 3 is from 100 °C to 300 °C, and the time of the heat-curing treatment is from 10 minutes to 20 minutes.

5. Plastic spraying process for bearing retainer according to claim 1, wherein the bearing retainer is cooled to 80 °C in the step 4.

6. An apparatus for processing plastic spraying on a bearing retainer, comprising a heating furnace and an plastic spraying device, wherein the heating furnace includes a furnace body (1),
**characterized in that**
the heating furnace is so structured that the bearing retainer is to be moved vertically in the heating furnace;
a device of vertical circulation (10) is fixedly disposed in the furnace body (1), and a fixing member (9) is provided on the device of vertical circulation (10), a tray (18) is horizontally placed in the furnace body (1), and the tray (18) is provided with a detachable member (20), the detachable member (20) provided on the tray (18) is so adapted as to be able to be mounted on the fixing member (9) provided on the device of vertical circulation (10),
a feed port is provided on a left side of the furnace body (1), and a discharge port is provided on a right side of the furnace body (1), and the feed port and the discharge port are not arranged on a same horizontal line.

## Patentansprüche

1. Kunststoffspritzverfahren für Lagerhalter, wobei das Verfahren die folgenden Verfahrens schritte umfasst:
Schritt 1: Vorbehandlung des Lagerhalters: Durchführung einer Entrostungs- und Dekontaminationsbehandlung auf dem Lagerhalter;
Schritt 2: Kunststoffspritzbehandlung auf dem Lagerhalter: Einsetzen des in Schritt 1 behandelten Lagerhalters in eine Kunststoffspritzvorrichtung, um eine Kunststoffspritzbehandlung auf dem Lagerhalter durchzuführen, wobei die Dicke der durch die Spritzbehandlung erhaltenen Beschichtung nicht weniger als 10 Mikrometer beträgt;
Schritt 3: Wärmehärtungsbehandlung auf dem Lagerhalter: Der in Schritt 2 behandelte Lagerhalter wird zum Erhitzen und Aushärten in einen Heizofen eingesetzt, die Erhitzungstemperatur ist nicht niedriger als 80 °C und die Erhitzungszeit beträgt nicht weniger als 5 Minuten;
Schritt 4: Kühlbehandlung des Lagerhalters: Abkühlung des Lagerhalters, nachdem der in Schritt 3 behandelte Lagerhalter aus dem Heizofen genommen wurde, und die Abkühlungstemperatur ist nicht höher als 80 °C;
**dadurch gekennzeichnet, dass**
in Schritt 3 der Lagerhalter vertikal im Heizofen bewegt wird; und
der Heizofen, der in Schritt 3 verwendet wird, einen Ofenkörper (1) einschließt, eine Vorrichtung der vertikalen Zirkulation (10) fest in dem Ofenkörper (1) angeordnet ist und ein Befestigungselement (9) an der Vorrichtung der vertikalen Zirkulation (10) bereitgestellt ist, eine Schale (18) horizontal in dem Ofenkörper (1) platziert ist und die Schale (18) mit einem abnehmbaren Element (20) versehen ist, wobei das abnehmbare Element (20), das an der Schale (18) bereitgestellt ist, so angepasst ist, dass es an dem Befestigungselement (9), das an der Vorrichtung der vertikalen Zirkulation (10) bereitgestellt ist, montiert werden kann,
eine Beschickungsöffnung an einer linken Seite des Ofenkörpers (1) bereitgestellt ist, und eine Auslassöffnung an einer rechten Seite des Ofenkörpers (1) bereitgestellt ist, und die Beschickungsöffnung und die Auslassöffnung nicht auf derselben horizontalen Linie angeordnet sind.

2. Kunststoffspritzverfahren für Lagerhalter nach Anspruch 1, wobei zur Durchführung der Entrostungsbehandlung des Lagerhalters im Schritt 1 eine Kugelstrahlmaschine verwendet wird.

3. Kunststoffspritzverfahren für Lagerhalter nach Anspruch 1, wobei die Dicke der durch die Kunststoffspritzbehandlung in Schritt 2 erhaltenen Beschichtung 30 Mikrometer bis 300 Mikrometer beträgt.

4. Kunststoffspritzverfahren für Lagerhalter nach Anspruch 1, wobei die Temperatur der Wärmehärtungsbehandlung in Schritt 3 von 100 °C bis 300 °C beträgt und die Zeit der Wärmehärtungsbehandlung von 10 Minuten bis 20 Minuten beträgt.

5. Kunststoffspritzverfahren für Lagerhalter nach Anspruch 1, wobei der Lagerhalter im Schritt 4 auf 80 °C abgekühlt wird.

6. Vorrichtung zur Kunststoffspritzbearbeitung auf einem Lagerhalter, umfassend einem Heizofen und eine Kunststoffspritzvorrichtung, wobei der Heizofen einen Ofenkörper (1) einschließt,
**dadurch gekennzeichnet, dass**
der Heizofen ist so aufgebaut, dass der Lagerhalter im Heizofen vertikal zu bewegen ist;
eine Vorrichtung der vertikalen Zirkulation (10) fest in dem Ofenkörper (1) angeordnet ist und ein Befestigungselement (9) an der Vorrichtung der vertikalen Zirkulation (10) bereitgestellt ist, eine Schale (18) horizontal in dem Ofenkörper (1) platziert ist und die Schale (18) mit einem abnehmbaren Element (20) versehen ist, wobei das abnehmbare Element (20), das an der Schale (18) bereitgestellt ist, so angepasst ist, dass es an dem Befestigungselement (9), das an der Vorrichtung der vertikalen Zirkulation (10) bereitgestellt ist, montiert werden kann,
eine Beschickungsöffnung an einer linken Seite des Ofenkörpers (1) bereitgestellt ist, und eine Auslassöffnung an einer rechten Seite des Ofenkörpers (1) bereitgestellt ist, und die Beschickungsöffnung und die Auslassöffnung nicht auf derselben horizontalen Linie angeordnet sind.

## Revendications

1. Processus de vaporisation de plastique pour retenue de roulement, ledit processus comprenant les étapes suivantes :
étape 1 : prétraitement de la retenue de roulement : réalisation d'un traitement de dérouillage et de décontamination de la retenue de roulement ;
étape 2 : traitement par vaporisation de plastique de la retenue de roulement : placer la retenue de roulement traité à l'étape 1 dans un dispositif de vaporisation de plastique pour effectuer un traitement par vaporisation de plastique sur la retenue de roulement, l'épaisseur du revêtement obtenu par le traitement par vaporisation n'étant pas inférieure à 10 microns ;
étape 3 : traitement par thermo-durcissement sur la retenue de roulement : placer la retenue de roulement traité à l'étape 2 dans un four de chauffage afin de le chauffer et le durcir, la température de chauffage n'étant pas inférieure à 80 °C, et le temps de chauffage n'étant pas inférieur à 5 minutes ;
étape 4 : traitement par refroidissement sur la retenue de roulement : refroidir la retenue de roulement traité à l'étape 3 après l'avoir sorti du four de chauffage, et la température de refroidissement ne doit pas être supérieure à 80 °C ;
**caractérisé en ce que**
à l'étape 3, la retenue de roulement est déplacé verticalement dans le four de chauffage ; et
le four de chauffage utilisée à l'étape 3 comprend un corps de four (1), un dispositif de circulation verticale (10) étant disposé de manière fixe dans le corps de four (1), et un élément de fixation (9) est prévu sur le dispositif de circulation verticale (10), un plateau (18) est placé horizontalement dans le corps de four (1), et le plateau (18) est muni d'un élément détachable (20), l'élément détachable (20) prévu sur le plateau (18) étant adapté de manière à pouvoir être monté sur l'élément de fixation (9) prévu sur le dispositif de circulation verticale (10),
un orifice d'alimentation est prévu sur un côté gauche du corps de four (1), et un orifice de refoulement est prévu sur un côté droit du corps de four (1), et l'orifice d'alimentation et l'orifice de refoulement n'étant pas disposés sur une même ligne horizontale.

2. Processus de vaporisation de plastique pour retenue de roulement selon la revendication 1, dans lequel une grenailleuse est utilisée pour effectuer le traitement de dérouillage sur la retenue de roulement de l'étape 1.

3. Processus de vaporisation de plastique pour retenue de roulement selon la revendication 1, dans lequel l'épaisseur du revêtement obtenu par le traitement par vaporisation de plastique à l'étape 2 est comprise entre 30 microns et 300 microns.

4. Processus de vaporisation de plastique pour retenue de roulement selon la revendication 1, dans lequel la température du traitement par thermo-durcissement à l'étape 3 est comprise entre 100 °C et 300 °C, et la durée du traitement par thermo-durcissement est comprise entre 10 minutes et 20 minutes.

5. Processus de vaporisation de plastique pour retenue de roulement selon la revendication 1, dans lequel la retenue de roulement est refroidi à 80 °C à l'étape 4.

6. Un appareil de traitement de la vaporisation de plastique sur une retenue de roulement, comprenant un four de chauffage et un dispositif de vaporisation de plastique, dans lequel le four de chauffage comprend un corps de four (1),
**caractérisé en ce que**
le four de chauffage est tellement structuré que la retenue de roulement doit être déplacé verticalement dans le four de chauffage ;
un dispositif de circulation verticale (10) étant disposé de manière fixe dans le corps de four (1), et un élément de fixation (9) est prévu sur le dispositif de circulation verticale (10), un plateau (18) est placé horizontalement dans le corps de four (1), et le plateau (18) est muni d'un élément détachable (20), l'élément détachable (20) prévu sur le plateau (18) étant adapté de manière à pouvoir être monté sur l'élément de fixation (9) prévu sur le dispositif de circulation verticale (10),
un orifice d'alimentation est prévu sur un côté gauche du corps de four (1), et un orifice de refoulement est prévu sur un côté droit du corps de four (1), et l'orifice d'alimentation et l'orifice de refoulement n'étant pas disposés sur une même ligne horizontale.
